# EUROPEAN PATENT APPLICATION

(11) **EP 4 645 226 A1**
(43) Date of publication of application: **05.11.2025**
(21) Application number: 23910173.6
(22) Date of filing: 14.12.2023
(51) Int. Cl.: G06T 11/00, G06T 11/60

(54) **SPECIAL EFFECT LAYER EDITING METHOD AND APPARATUS, ELECTRONIC DEVICE, AND STORAGE MEDIUM**

(30) Priority: 29.12.2022 CN 202211715626
(71) Applicant: Beijing Zitiao Network Technology Co., Ltd., Beijing 100190 (CN)
(72) Inventor: WU, Yueqian, Beijing 100028 (CN); QIN, Yuwen, Beijing 100028 (CN); LIU, Gao, Beijing 100028 (CN); WANG, Ziyue, Beijing 100028 (CN); WEI, Yantong, Beijing 100028 (CN); YE, Zhanhong, Beijing 100028 (CN); YIN, Xunpeng, Beijing 100028 (CN); HUANG, Weifeng, Beijing 100028 (CN)
(74) Representative: Marks & Clerk LLP
(86) International application number: PCT/CN2023/138729
(87) International publication number: WO 2024/140243

(57) **Abstract**

Embodiments of the present disclosure provide a special effect layer editing method and apparatus, an electronic device, and a storage medium. The method comprises: displaying a template image, wherein a plurality of added special effect layers are displayed in the template image; receiving a first editing trigger operation for the special effect layers, and displaying the layer identifiers of the special effect layers in a layer editing area according to the adding sequence of the special effect layers; and receiving a second editing trigger operation for a layer identifier, and adjusting the special effect layer corresponding to the layer identifier. According to the embodiments of the present disclosure, special effect layers can be conveniently and flexibly adjusted, the difficulty of special effect editing is reduced, and user experience is improved.

## Description

The present application claims the priority to Chinese patent application No. 202211715626.1, filed on December 29, 2022, the entire disclosure of which is incorporated herein by reference in its entirety as a part of the present application.

### TECHNICAL FIELD

Embodiments of the present disclosure relate to an editing method and apparatus of an effect layer, an electronic device and a storage medium.

### BACKGROUND

With the rise of effects production, the performance of effects has attracted more and more attention. In order to enrich the performance of effects, many effects production tools can provide various effects. Generally, a single effect includes multiple effect elements, and the multiple effect elements often overlap.

In the process of editing effects, if an effect element, which is displayed on a lower layer and covered, needs to be adjusted, it is necessary to adjust the effect elements which are displayed on an upper layer and cover the effect element. This method of editing effects is complicated and affects the user experience.

### SUMMARY

The present disclosure provides an editing method and apparatus of an effect layer, an electronic device and a storage medium, so as to adjust the effect layer more conveniently and flexibly, reduce the difficulty of editing the effects and improve the user experience.

In a first aspect, an embodiment of the present disclosure provides an editing method of an effect layer, which comprises:
presenting a template image, wherein a plurality of added effect layers are presented in the template image;
receiving a first editing trigger operation acting on the effect layer, and presenting a layer identifier of the effect layer in a layer editing region according to an adding order of the effect layer;
receiving a second editing trigger operation acting on the layer identifier, and adjusting the effect layer corresponding to the layer identifier.

In a second aspect, an embodiment of the present disclosure provides an editing apparatus of an effect layer, which comprises:
an effect layer presenting module, configured to present a template image, wherein a plurality of added effect layers are presented in the template image;
an editing region presenting module, configured to receive a first editing trigger operation acting on the effect layer, and present a layer identifier of the effect layer in a layer editing region according to an adding order of the effect layer; and
an effect layer adjusting module, configured to receive a second editing trigger operation acting on the layer identifier, and adjust the effect layer corresponding to the layer identifier.

In a third aspect, an embodiment of the present disclosure provides an electronic device, which comprises:
one or a plurality of processors;
a storage apparatus, configured to store one or a plurality of programs,
wherein when the one or plurality of programs are executed by the one or plurality of processors, the one or plurality of processors are caused to realize the editing method of the effect layer as described in any one of the above embodiments.

In a fourth aspect, an embodiment of the present disclosure provides a storage medium containing computer-executable instructions, wherein the computer-executable instructions, when executed by a computer processor, are used to execute the editing method of the effect layer according to any one of the above embodiments.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a flowchart of an editing method of an effect layer provided by an embodiment of the present disclosure;
Fig. 2 is an example diagram of an interface for editing an effect layer according to an editing method of an effect layer provided by an embodiment of the present disclosure;
Fig. 3 is an example diagram of an interface for editing an effect layer according to an editing method of an effect layer provided by an embodiment of the present disclosure;
Fig. 4 is an example diagram of an interface for editing an effect layer according to an editing method of an effect layer provided by an embodiment of the present disclosure;
Fig. 5 is a flowchart of an editing method of an effect layer provided by an embodiment of the present disclosure;
Fig. 6 is a flowchart of an editing method of an effect layer provided by an embodiment of the present disclosure;
Fig. 7 a flowchart of an editing method of an effect layer provided by an embodiment of the present disclosure;
Fig. 8 is a schematic structural diagram of an editing apparatus of an effect layer provided by an embodiment of the present disclosure; and
Fig. 9 is a schematic structural diagram of an electronic device provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

The names of messages or information exchanged between multiple apparatuses in the embodiments of the present disclosure are illustrative and not to limit the scope of the messages or information.

It is to be understood that before using technical solutions disclosed in various embodiments of the present disclosure, a user should be notified of the type, scope of use, use scene and the like of personal information involved in the present disclosure in an appropriate manner according to relevant laws and regulations, and authorization from the user should be acquired.

For example, in response to receiving an active request from a user, prompt information is sent to the user to explicitly remind the user that the requested operation requires acquisition and use of personal information of the user. Therefore, the user can independently choose, according to the prompt information, whether to provide personal information to software or hardware, such as an electronic device, an application program, a server, or a storage medium, etc., for executing operations of the technical solution of the present disclosure.

In an alternative but non-limiting implementation, in response to receiving the active request from the user, the manner in which the prompt information is sent to the user may be, for example, in the form of a pop-up window in which the prompt information may be presented in text. Additionally, the pop-up window may also carry a selection control for the user to select "agree" or "disagree" to determine whether to provide personal information to the electronic device.

It is to be understood that the preceding process of notifying the user and obtaining authorization from the user is illustrative and does not limit the embodiments of the present disclosure, and that other manners complying with relevant laws and regulations may also be applied to the embodiments of the present disclosure.

It is to be understood that the data involved in the technical solutions (including but not limited to the data itself, the acquisition or use of the data) shall comply with the requirements of corresponding laws, regulations and relevant provisions.

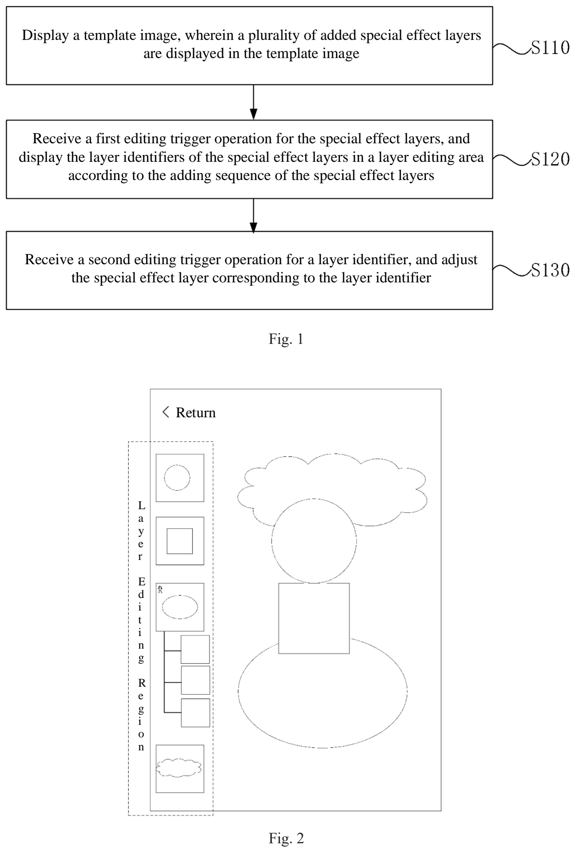

Fig. 1 is a flowchart of an editing method of an effect layer provided by an embodiment of the present disclosure. The embodiment of the present disclosure is applicable to the situation of editing an effect layer on a mobile terminal. The method can be executed by an editing apparatus of an effect layer, and the apparatus can be implemented in the form of software and/or hardware. Optionally, the apparatus can be implemented by an electronic device, which can be a mobile terminal, a PC terminal or a server, etc.

As illustrated in Fig. 1, the method in the present embodiment can specifically include:
S110: Presenting a template image, wherein a plurality of added effect layers are presented in the template image.

The template image can be understood as a sample image preset in the effects production tool and used to present the performance of action of an effect material. The effect material can be understood as a material that can be added to the template image and can present the performance of a preset effect. The effect material can include an image, a text texture or a video, etc. The image material can include a static image and/or a dynamic image. There can be many kinds of formats for the image materials, and the specific formats thereof are not limited here, such as JPG format, PNG format and GIF format. In addition, The effect material can also include, but is not limited to, a filter material and a text material. There are many kinds of fonts for characters in the text material, and the specific fonts are not limited here, such as, SimSun, SimHei and KaiTi, etc.

In the embodiment of the present disclosure, there are various ways to present the template image. For example, upon receiving a startup operation applied to an application program for editing a template image, the template image can be presented; alternatively, upon receiving a control trigger operation applied to a template image editing control, the template image can be presented, wherein the template image editing control can be understood as a preset control for editing the template image.

In the embodiment of the present disclosure, the template image can include a plurality of effect layers. The effect layer can be understood as a layer used to set effect materials. In other words, the effect materials included in the template image can be set on a plurality of effect layers. The correspondence between effect layers and effect materials can be one-to-one or one-to-plural. That is to say, one effect layer can contain one or more effect materials. The shape of the effect layer can be set according to the actual needs, and for example, it can be rectangular, square or circular, etc. In the embodiment of the present disclosure, the purpose of setting a plurality of effect layers in the template image is that effect materials can be set on different effect layers, and the advantages of doing so are that not only the difficulty for the user to edit the template image is reduced, but also the personalized editing needs of the user on the template image is better satisfied.

Specifically, an editing instruction for editing a template image is received. Further, the effect layers associated with the template image can be determined based on the editing instruction, that is, a plurality of added effect layers in the template image can be determined based on the editing instruction. After determining the plurality of added effect layers in the template image, the plurality of added effect layers can be presented in the template image. There are many ways to receive the editing instruction for editing the template image. For example, a control trigger operation applied to a template image editing control corresponding to the template image is received, and an editing instruction for editing the template image is generated based on the control trigger operation, wherein the template image editing control can be used for editing the template image; alternatively, an editing instruction, which is input into a preset instruction input box, for editing the template image is received.

S120: Receiving a first editing trigger operation acting on the effect layer, and presenting a layer identifier of the effect layer in a layer editing region according to an adding order of the effect layer.

The first editing trigger operation can be understood as a trigger operation applied to the effect layer, which can be used to edit the effect layer. The layer identifier of the effect layer can be used to distinguish different effect layers. Optionally, the layer identifier of the effect layer can be a thumbnail of the effect material presented by the effect layer corresponding to the layer identifier. The name of the layer identifier of the effect layer can be composed of at least one of words, letters and numbers. The adding order of the effect layers can be understood as the sequence in which the effect layers are added to the template image. Illustratively, the effect layers can include an effect layer A1, an effect layer A2 and an effect layer A3. The sequence in which the effect layers are added is the effect layer A1, the effect layer A2 and the effect layer A3. Then, the adding order of the effect layers is the effect layer A1, the effect layer A2 and the effect layer A3. The layer editing region can be understood as a region for presenting the layer identifiers of the effect layers and editing the effect layers corresponding to the layer identifiers.

Specifically, a first editing trigger operation acting on the effect layer is received. Further, the adding order of the effect layers can be obtained based on the first editing trigger operation. After determining the adding order of the effect layers, the layer identifiers of the effect layers corresponding to the adding order can be determined. And further, after being arranged according to the adding order of the effect layers, the layer identifiers of the effect layers can be presented in the layer editing region (see Fig. 2). A variety of effect elements can be mounted on the same layer.

In the embodiment of the present disclosure, there are various ways to obtain the layer identifier of the effect layer. For example, a layer identifier input by a user for an effect layer is received, and the layer identifier input by the user is taken as the layer identifier of the effect layer; alternatively, after the generation of the effect layer is detected, a layer identifier is generated based on a preset layer identifier generation rule, which is taken as the layer identifier of the generated effect layer. Illustratively, the layer identifier generation rule can be to combine the default name of the effect layer with the adding order (e.g., sequence number) thereof.

It should be noted that in the case where the editing instruction for editing the template image is not received, the template image can be presented and the layer editing region can be hidden. In the case where the editing instruction for editing the template image is received, the template image and the layer editing region can be presented. In the embodiment of the present disclosure, there can be various interface presenting structures of the layer editing region and the template image, and the specific interface display structure is not limited here, such as an up-down structure, a left-right structure or a surrounding structure, etc. It should also be noted that in order to improve the aesthetics of the interface, the template image and the layer editing region can be presented in a responsive layout mode in the case where the editing instruction for editing the template image is received.

S130: Receiving a second editing trigger operation acting on the layer identifier, and adjusting the effect layer corresponding to the layer identifier.

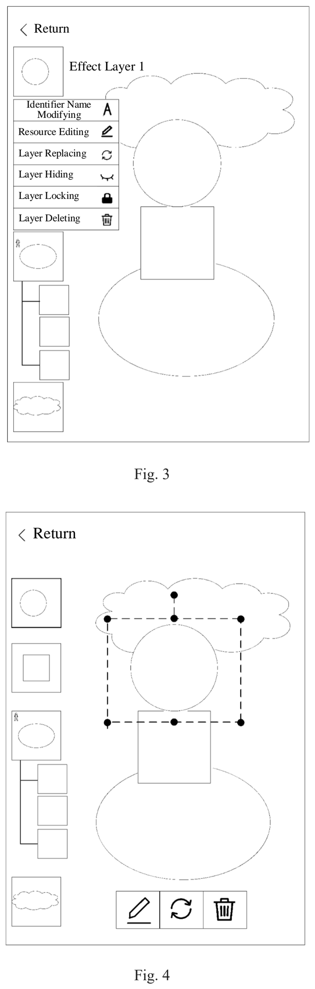

In the embodiment of the present disclosure, the second editing trigger operation can be understood as a trigger operation applied to the layer identifier presented in the layer editing region, which can be used to adjust the effect layer corresponding to the layer identifier. The layer editing region can include at least one of a layer hiding control ("Layer Hiding" in Fig. 3), a layer deleting control ("Layer Deleting" in Fig. 3), a layer replacing control ("Layer Replacing" in Fig. 3), a layer locking control ("Layer Locking" in Fig. 3), a resource editing control ("Resource Editing" in Fig. 3) and an identifier name modifying control ("Identifier Name Modifying" in Fig. 3). In the embodiment of the present disclosure, the second editing trigger operation can include at least one of a layer hiding operation, a layer deleting operation, a layer replacing operation, a layer locking operation, a resource editing operation, and an identifier name modifying operation, etc.

The layer hiding operation can be a control trigger operation applied to the layer hiding control, and can be used to hide the added effect layer in the template image. The layer deleting operation can be a control trigger operation applied to the layer deleting control, and can be used to delete the added effect layer in the template image. The layer replacing operation can be a control trigger operation applied to the layer replacing control, and can be used to replace the added effect layer in the template image. The layer locking operation can be a control trigger operation applied to the layer locking control, and can be used to lock the added effect layer in the template image. The resource editing operation can be understood as a control trigger operation applied to the resource editing control, and can be used to view, import and export effect materials. The identifier name modifying operation can be a control trigger operation applied to the identifier name modifying control, and can be used to modify the layer identifier of the effect layer.

In one embodiment, a layer hiding operation acting on the layer identifier is received, and the effect layer corresponding to the layer identifier is adjusted to an invisible state in the template image. Specifically, a control triggering operation applied to the layer hiding control corresponding to the layer identifier is received. Further, based on the control trigger operation, the effect lay corresponding to the layer identifier in the template image can be determined according to the correspondence between the layer identifiers and the effect layers. After determining the effect layer, the display status of the effect layer can be set to an invisible state, so as to hide the effect layer in the template image. In the embodiment of the present disclosure, the display status of the effect layer can include an invisible state and a visible state. The display status of the effect layer is an invisible state, which can indicate that the effect layer is hidden. The display status of the effect layer is a visible state, which can indicate that the effect layer can be displayed.

In another embodiment, a layer deleting operation acting on the layer identifier is received, and the effect layer corresponding to the layer identifier is deleted from the template image. Specifically, a control trigger operation applied to the layer deleting control corresponding to the layer identifier is received. Further, based on the control trigger operation, the effect layer corresponding to the layer identifier in the template image can be deleted.

In still another embodiment, a layer replacing operation acting on the layer identifier is received, and the layer identifier and the effect layer in the template image are updated based on the layer replacing operation. Specifically, a control trigger operation applied to the layer replacing control corresponding to the layer identifier is received. Further, based on the control trigger operation, the to-be-replaced effect layer in the template image can be determined, and an effect layer selection interface can be presented. One or more selectable effect layers can be presented in the effect layer selection interface. After receiving a selecting operation acting on the selectable effect layer in the effect layer selection interface, the selected effect layer can be determined. Further, the to-be-replaced effect layer in the template image can be replaced by the selected effect layer, and the layer identifier of the to-be-replaced effect layer can be updated to the layer identifier of the selected effect layer.

In yet another embodiment, an identifier name modifying operation acting on the layer identifier is received, and the identifier name of the layer identifier displayed in the layer editing region is modified based on the identifier name modifying operation. Specifically, a control trigger operation applied to the identifier name modifying control corresponding to the layer identifier is received. Further, based on the control trigger operation, an input box for displaying the identifier name of the layer identifier in the layer editing region can be determined. After the determination, the editing status of the input box can be changed to an editable state. In the case where the editing status of the input box is an editable state, an identifier name input based on the input box can be received. Further, the input identifier name can be taken as the identifier name of the layer identifier and displayed in the layer editing region.

In one embodiment, a layer locking operation acting on the layer identifier is received, and the editing status of the effect layer corresponding to the layer identifier is adjusted to a non-editable state based on the layer locking operation. Specifically, a control trigger operation applied to the layer locking control corresponding to the layer identifier is received. Further, based on the control trigger operation, the editing status of the effect layer correspond to the layer identifier can be adjusted to a non-editable state. The editing status of the effect layer corresponding to the layer identifier is adjusted to a non-editable state, which can indicate that the layer identifier is locked. In order to more intuitively reflect whether the effect layer is locked, in the embodiment of the present disclosure, in the case where the layer identifier is locked, a lock icon that can indicate that the layer is locked can be presented at a preset position of the layer identifier (for example, the upper left corner, the lower left corner, the upper right corner or the lower right corner, etc.).

On the basis of the above embodiments, the embodiment of the present disclosure can further include: receiving a layer adjusting operation acting on the effect layer, and then adjusting the effect layer based on the layer adjusting operation.

The layer adjusting operation can include at least one of a display position adjusting operation, a display size adjusting operation, a display color adjusting operation, a replacing operation, a deleting operation, and a hiding operation. The display position adjusting operation can be understood as an operation for adjusting the display position of the effect layer in the template image. The display size adjusting operation can be understood as an operation for adjusting the display size of the effect layer in the template image. The display color adjusting operation can be understood as an operation for adjusting the display color of the effect layer in the template image. The replacing operation can be understood as an operation for replacing the effect layer in the template image. The deleting operation can be understood as an operation for deleting the effect layer in the template image. The hiding operation can be understood as an operation for hiding the effect layer in the template image.

Specifically, after receiving the layer adjusting operation applied to the effect layer, preset controls ("Editing Icon," "Refreshing Icon" and "Deleting Icon" in Fig. 4) for adjusting the effect layer can be presented in the template image. After receiving the control trigger operation applied to the preset control, the effect layer can be adjusted based on the control trigger operation. The advantage of doing so is that it is more convenient to visually adjust the effect layer by receiving the layer adjusting operation applied to the effect layer.

In order to meet the needs of the user editing effects anytime and anywhere, in the embodiment of the present disclosure, the template image can be presented on a mobile terminal, wherein a plurality of added effect layers are presented in the template image, so that the user can edit effects based on the mobile terminal. In the embodiment of the present disclosure, a plurality of added effect layers in the template image are presented on the mobile terminal, which can avoid the increase in occupation of memory resources of the mobile terminal due to loading effect layers other than the plurality of added effect layers in the template image by the mobile terminal, and further reduce the latency of presenting the effect layers by the mobile terminal.

On this basis, in the process of editing effects on the mobile terminal, due to the limitation of the screen area of the mobile terminal, in the embodiment of the present disclosure, the layer editing region and the template image can be presented on the mobile terminal in a responsive layout mode according to the screen size of the mobile terminal. In order to enhance the user experience, the embodiment of the present disclosure presents the layer identifiers of the added effect layer in the template image to be edited in the layer editing region in an intuitive way, which is convenient for the user to select and edit the effect layer and reduces the editing difficulty of effects.

According to the technical solution of the embodiment of the present disclosure, a template image is presented, wherein a plurality of added effect layers are presented in the template image; a first editing trigger operation acting on the effect layer is received, and a layer identifier of the effect layer is presented in a layer editing region according to an adding order of the effect layer, so that the user can flexibly edit the layer identifier of the effect layer based on a simple interactive interface. A second editing trigger operation acting on the layer identifier, and the effect layer corresponding to the layer identifier is adjusted, thereby reducing the difficulty of editing effects. According to the technical solution of the embodiment of the present disclosure, the effect layer can be adjusted conveniently and flexibly, and the user experience can be improved.

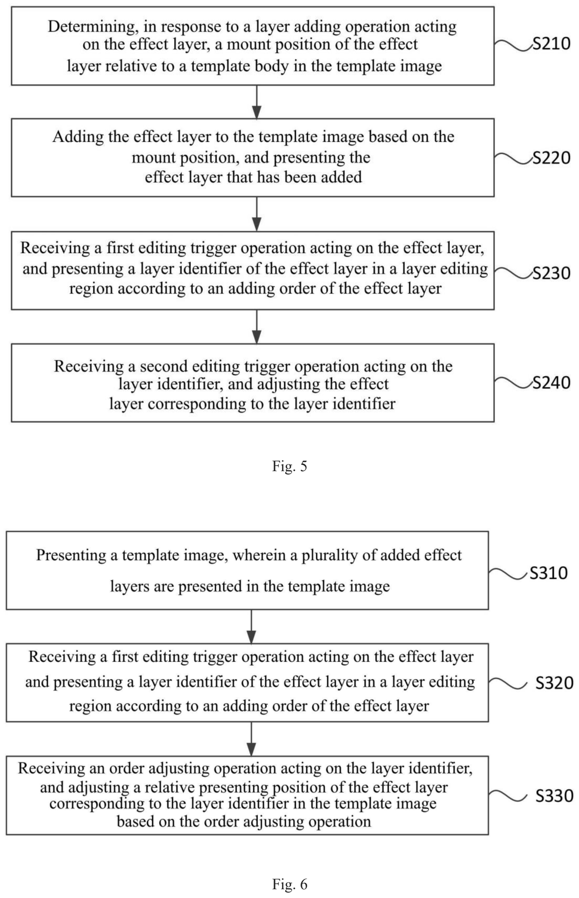

Fig. 5 is a flowchart of an editing method of an effect layer provided by an embodiment of the present disclosure. The technical solution of the present embodiment is based on the above embodiments. Optionally, the method further includes: in response to a layer adding operation acting on the effect layer, determining a mount position of the effect layer relative to a template body in the template image, adding the effect layer to the template image based on the mount position, and presenting the effect layer that has been added. Detailed description can be found in the description of the present embodiment. The same or similar technical features as those in the above embodiments are not repeated here.

As illustrated in Fig. 5, the method of the present embodiment can specifically include:
S210: determining, in response to a layer adding operation acting on the effect layer, a mount position of the effect layer relative to a template body in the template image.

In the embodiment of the present disclosure, the layer adding operation can be understood as an operation for adding an effect layer to the template image. The template image may include a template body ("ellipse" in Fig. 2). The template body can be understood as an object of a preset type in the template image. In practical applications, the template body can be people, animals, plants or buildings, etc. The mount position can be understood as the display position of the effect layer relative to the template body in the template image in the case where the effect layer is added to the template image. In the embodiment of the present disclosure, the mount position can include at least one of a foreground mount point, a body mount point and a background mount point in the template image.

The effect layer corresponding to the foreground mount point can be located on an upper layer of the template body. The foreground mount point can be used to add a foreground material on the upper layer of the template body. The effect layer corresponding to the body mount point can be located on the same layer as the template body. The body mount point can be used to add body effects on the layer where the template body is located. The body effect can be understood as the effect set for the template body, such as beautification processing, stylization processing, deformation processing, filtering processing and brightness processing, etc. The effect layer corresponding to the background mount point can be located on a lower layer of the template body. The background mount point can be used to add a background material on the lower layer of the template body.

In one embodiment, a control trigger operation applied to a layer adding control is received. Further, a layer selection interface can be presented based on the control trigger operation. The layer selection interface can include a plurality of to-be-added effect layers. After receiving a selecting operation applied to the to-be-added effect layer, a selected effect layer can be determined. After determining the selected effect layer, the effect material in the effect layer can be analyzed. Therefore, an analysis result can be obtained. Further, the mount position of the effect layer relative to the template body in the template image can be determined according to the analysis result.

It should be noted that in the embodiment of the present disclosure, adding the effect layer to the template image can include: obtaining material information of the effect material, and transmitting the material information to the entrance parameters of an effect layer generation method used for generating the effect layer. After the transmitting of the parameters is completed, the effect layer generation method can be executed. Then, a to-be-added effect layer can be generated. After the to-be-added effect layer is generated, the generated effect layer can be loaded into the template image according to the material information. The material information can include the display position of the effect material and the layer order of the effect layer corresponding to the effect material. The effect layer generation method can be packaged code with the function of generating an effect layer. Further, the to-be-added effect layer can be generated.

In one embodiment, after receiving the layer adding operation applied to the template image, the mount position of the effect layer relative to the template body in the template image can be determined according to the operation position of the layer adding operation. Illustratively, in the case where the operation position of the layer adding operation is a region where the template body is displayed, the mount position of the effect layer relative to the template body in the template image can be determined as the body mount point; in the case where the operation position of the layer adding operation is a region where the foreground material is displayed, the mount position of the effect layer relative to the template body in the template image can be determined as the foreground mount point; in the case where the operation position of the layer adding operation is a region where the background material is displayed, the mount position of the effect layer relative to the template body in the template image can be determined as the background mount point.

S220: Adding the effect layer to the template image based on the mount position, and presenting the effect layer that has been added.

Specifically, in the case where the mount position is the foreground mount point, the to-be-added effect layer can be added on the upper layer of the template body in the template image, and the effect layer that has been added can be presented on the upper layer of the template body in the template image. In the case where the mount position is the body mount point, the effect layer can be added to the layer where the template body is located in the template image; alternatively, the to-be-added effect layer is taken as a sub-layer of the layer where the template body is located, so that the to-be-added effect layer and the layer where the template body is located are the same layer. In the case where the mount position is the background mount point, the to-be-added effect layer can be added on the lower layer of the template body in the template image, and the effect layer that has been added can be presented on the lower layer of the template body in the template image.

S230: Receiving a first editing trigger operation acting on the effect layer, and presenting a layer identifier of the effect layer in a layer editing region according to an adding order of the effect layer.

S240: Receiving a second editing trigger operation acting on the layer identifier, and adjusting the effect layer corresponding to the layer identifier.

According to the technical solution of the embodiment of the present disclosure, the mount position of the effect layer relative to the template body in the template image is determined in response to a layer adding operation acting on the effect layer, the effect layer is added to the template image based on the mount position, and the effect layer that has been added is presented, so that the effect layer can be effectively added to the template image.

Fig. 6 is a flowchart of an editing method of an effect layer provided by an embodiment of the present disclosure. The technical solution of this embodiment is based on the above embodiments. Optionally, the second editing trigger operation includes an order adjusting operation; the receiving a second editing trigger operation acting on the layer identifier, and adjusting the effect layer corresponding to the layer identifier, includes: receiving an order adjusting operation acting on the layer identifier, and adjusting a relative presenting position of the effect layer corresponding to the layer identifier in the template image based on the order adjusting operation. Detailed description can be found in the description of the present embodiment. The same or similar technical features as those in the above embodiments are not repeated here.

As illustrated in Fig. 6, the method of the present embodiment can specifically include:
S310: Presenting a template image, wherein a plurality of added effect layers are presented in the template image.

S320: Receiving a first editing trigger operation acting on the effect layer, and presenting a layer identifier of the effect layer in a layer editing region according to an adding order of the effect layer.

S330: Receiving an order adjusting operation acting on the layer identifier, and adjusting a relative presenting position of the effect layer corresponding to the layer identifier in the template image based on the order adjusting operation.

The order adjusting operation can be understood as an operation applied to the layer identifier in the layer editing region, and can be used to adjust the relative presenting position of the effect layer in the template image. The relative presenting position can be understood as the relative position of each effect layer presented in the template image.

Specifically, an order adjusting operation applied to the layer identifier is received. Further, based on the order adjusting operation, a layer order adjusting interface corresponding to the layer identifier can be presented. The layer order adjusting interface can present a layer upward adjusting control and a layer downward adjusting control. After receiving a control trigger operation applied to the layer upward adjusting control, the position of the effect layer corresponding to the layer identifier in the template image can be adjusted upward based on the control trigger operation. After receiving a control trigger operation applied to the layer downward adjusting control, the position of the effect layer corresponding to the layer identifier in the template image can be adjusted downward based on the control trigger operation. The layer order adjusting interface can be understood as an interface for adjusting the order of layers corresponding to the layer identifiers. The layer upward adjusting control can be used to adjust the effect layer upward in terms of the layer order thereof in the template image. The layer downward adjusting control can be used to adjust the effect layer downward in terms of the layer order thereof in the template image.

In the embodiment of the present disclosure, the receiving an order adjusting operation acting on the layer identifier, and adjusting a relative presenting position of the effect layer corresponding to the layer identifier in the template image based on the order adjusting operation, can include: receiving a dragging operation acting on the layer identifier, and determining the effect layer corresponding to the layer identifier being dragged and effect layers adjacent to the effect layer after being dragged; modifying a rendering sequence parameter corresponding to the effect layer being dragged based on the effect layers adjacent to the effect layer after being dragged, so as to adjust the relative presenting position of the effect layer in the template image.

The rendering sequence parameter can be understood as a parameter used to render the effect layer contained in the template image. The rendering order parameter can include the relative presenting position information of each effect layer in the template image.

Specifically, a dragging operation acting on the layer identifier is received, and the layer identifier being dragged and the layer identifiers adjacent to the layer identifier after being dragged can be determined based on the dragging operation. Further, the effect layer corresponding to the layer identifier being dragged and the effect layers adjacent to the effect layer after being dragged can be determined according to the correspondence between the layer identifiers and the effect layers. After determining the effect layers adjacent to the effect layer after being dragged, the rendering sequence parameter corresponding to the effect layer being dragged can be modified based on the effect layers adjacent to the effect layer after being dragged. For example, the effect layers adjacent to the effect layer A after being dragged include a previous layer above the effect layer A and/or a next layer below the effect layer A. Further, the relative presenting position of the effect layer in the template image can be adjusted according to the rendering sequence parameter.

According to the technical solution of the embodiment of the present disclosure, an order adjusting operation acting on the layer identifier is received, and the relative presenting position of the effect layer corresponding to the layer identifier in the template image is adjusted based on the order adjusting operation, so that the relative presenting position of the effect layer in the template image can be adjusted more conveniently and flexibly, and the difficulty of editing the effect layer is further reduced.

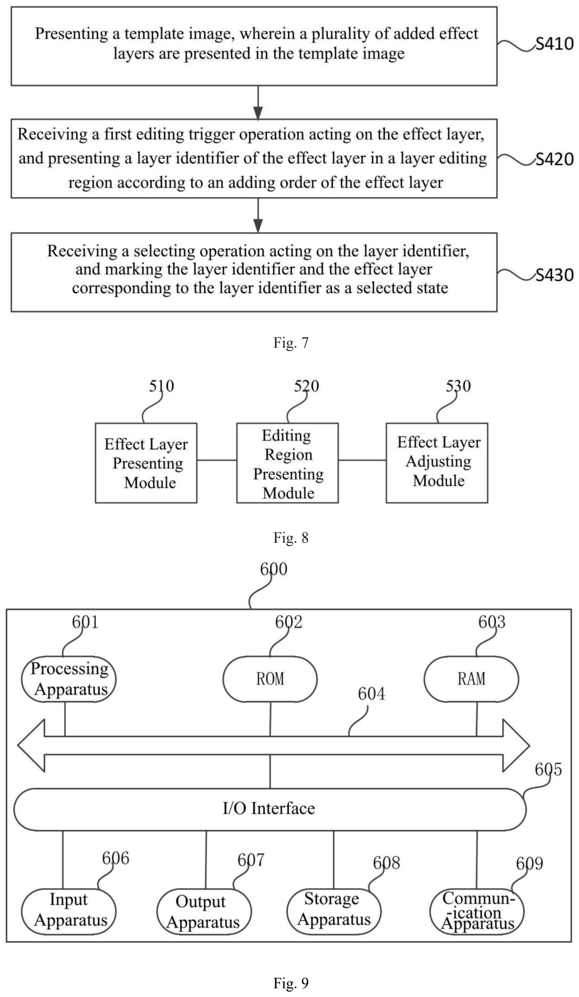

Fig. 7 is a flowchart of an editing method of an effect layer provided by an embodiment of the present disclosure. The technical solution of the present embodiment is based on the above embodiments. Optionally, the second editing trigger operation includes a selecting operation; the receiving a second editing trigger operation acting on the layer identifier, and adjusting the effect layer corresponding to the layer identifier, includes: receiving a selecting operation acting on the layer identifier, and marking the layer identifier and the effect layer corresponding to the layer identifier as a selected state. Detailed description can be found in the description of the present embodiment. The same or similar technical features as those in the above embodiments are not repeated here.

As illustrated in Fig. 7, the method of the present embodiment can specifically include:
S410: Presenting a template image, wherein a plurality of added effect layers are presented in the template image.

S420: Receiving a first editing trigger operation acting on the effect layer, and presenting a layer identifier of the effect layer in a layer editing region according to an adding order of the effect layer.

S430: Receiving a selecting operation acting on the layer identifier, and marking the layer identifier and the effect layer corresponding to the layer identifier as a selected state.

The selecting operation can be understood as an operation used to select the layer identifier presented in the layer editing region. The selecting operation can be used to mark the selected layer identifier and the effect layer corresponding to the selected layer identifier as a selected state.

Specifically, a selecting operation (e.g., a clicking operation) applied to the layer identifier presented in the layer editing region is received, and then a selected layer identifier can be determined based on the selecting operation. After determining the selected layer identifier, the selected layer identifier can be marked as a selected state, and the effect layer corresponding to the selected layer identifier can be determined according to the correspondence between the layer identifiers and the effect layers. After determining the effect layer corresponding to the selected layer identifier, the effect layer corresponding to the selected layer identifier can be marked as a selected state.

On the basis of the above embodiment, after the selected layer identifier is marked as a selected state, the effect layer corresponding to the selected layer identifier can be placed at the top layer. Further, the effect layer corresponding to the selected layer identifier can be adjusted in a highlighting way. In the embodiment of the present disclosure, the operation of adjusting the effect layer corresponding to the selected layer identifier in a highlighting way can include at least one of a layer hiding operation, a layer deleting operation, a layer replacing operation and an identifier name modifying operation, etc.

It should be noted that after the effect layer corresponding to the selected layer identifier is placed at the top layer, a preset layer editing control corresponding to the selected layer identifier can be presented in the layer editing region. The preset layer editing control can include at least one of a layer hiding control, a layer deleting control, a layer replacing control and an identifier name modifying control. After receiving a control trigger operation of the preset layer editing control, corresponding layer editing processing can be performed on the effect layer based on the control trigger operation.

As an optional implementation of the embodiment of the present disclosure, a layer hiding operation acting on the layer identifier is received. Further, based on the layer hiding operation, the effect layer corresponding to the layer identifier can be adjusted to an invisible state in the template image.

As another optional embodiment of the embodiment of the present disclosure, after the effect layer corresponding to the selected layer identifier is placed at the top layer, a layer deleting operation acting on the layer identifier can be received. Further, based on the layer deleting operation, the effect layer corresponding to the layer identifier can be deleted from the template image.

As still another optional implementation of the embodiment of the present disclosure, after the effect layer corresponding to the selected layer identifier is placed at the top layer, a layer replacing operation acting on the layer identifier can be received. Further, based on the layer replacing operation, the layer identifier and the effect layer in the template image can be updated .

As yet another optional implementation of the embodiment of the present disclosure, after the effect layer corresponding to the selected layer identifier is placed at the top layer, an identifier name modifying operation acting on the layer identifier can be received. Further, based on the identifier name modifying operation, the identifier name of the layer identifier displayed in the layer editing region can be modified.

On the basis of the above embodiment, after receiving the selecting operation acting on the layer identifier presented in the layer editing region, the method can further include: receiving a deselecting operation acting on the selected layer identifier, and marking the selected layer identifier and the effect layer corresponding to the selected layer identifier as an unselected state. Illustratively, the deselecting operation can be a long press trigger operation, wherein the trigger duration of the long press trigger operation can be set according to actual situations, such as 300 milliseconds. In order to feedback the user's operation effect in time, when the operation duration of the long press trigger operation reaches a preset duration, the user can be prompted that the selected effect layer has been deselected by means of vibration and/or ringtone notification.

According to the technical solution of the embodiment of the present disclosure, a selecting operation acting on the layer identifier is received, and the layer identifier and the effect layer corresponding to the layer identifier are marked as a selected state, so that the effect layer can be selected more conveniently, thus facilitating the subsequent editing of the effect layer and further improving the editing efficiency of the effect layer.

Fig. 8 is a schematic structural diagram of an editing apparatus of an effect layer provided by an embodiment of the present disclosure. As illustrated in Fig. 8, the apparatus includes an effect layer presenting module 510, an editing region presenting module 520 and an effect layer adjusting module 530.

The effect layer presenting module 510 is configured to present a template image, wherein a plurality of added effect layers are presented in the template image; the editing region presenting module 520 is configured to receive a first editing trigger operation acting on the effect layer, and present a layer identifier of the effect layer in a layer editing region according to an adding order of the effect layer; the effect layer adjusting module 530 is configured to receive a second editing trigger operation acting on the layer identifier, and adjust the effect layer corresponding to the layer identifier.

According to the technical solution of the embodiment of the present disclosure, through an effect layer presenting module, a template image is presented, wherein a plurality of added effect layers are presented in the template image; through an editing region presenting module, a first editing trigger operation acting on the effect layer is received, and a layer identifier of the effect layer is presented in a layer editing region according to an adding order of the effect layer, so that the user can flexibly edit the layer identifier of the effect layer based on a simple interactive interface; through an effect layer adjusting module, a second editing trigger operation acting on the layer identifier, and the effect layer corresponding to the layer identifier is adjusted, thereby reducing the difficulty of editing effects. According to the technical solution of the embodiment of the present disclosure, the effect layer can be adjusted conveniently and flexibly, and the user experience can be improved.

On the basis of the above optional technical solutions, optionally, the apparatus further includes an effect layer adding module, wherein the effect layer adding module is configured to:
determine, in response to a layer adding operation acting on the effect layer, a mount position of the effect layer relative to a template body in the template image, and add the effect layer to the template image based on the mount position, and present the effect layer that has been added.

On the basis of the above optional technical solutions, optionally, the mount position includes at least one of a foreground mount point, a body mount point and a background mount point in the template image, wherein an effect layer corresponding to the foreground mount point is located on an upper layer of the template body, an effect layer corresponding to the body mount point is located on a same layer as the template body, and an effect layer corresponding to the background mount point is located on a lower layer of the template body.

On the basis of the above optional technical solutions, optionally, the second editing trigger operation includes an order adjusting operation; the effect layer adjusting module 530 is configured to:
receive an order adjusting operation acting on the layer identifier, and adjust a relative presenting position of the effect layer corresponding to the layer identifier in the template image based on the order adjusting operation.

On the basis of the above optional technical solutions, optionally, the effect layer adjusting module 530 is specifically configured to:
receive a dragging operation acting on the layer identifier, and determine the effect layer corresponding to the layer identifier being dragged and effect layers adjacent to the effect layer after being dragged;
modify a rendering sequence parameter corresponding to the effect layer being dragged based on the effect layers adjacent to the effect layer after being dragged, so as to adjust the relative presenting position of the effect layer in the template image.

On the basis of the above optional technical solutions, optionally, the second editing trigger operation includes a selecting operation; the effect layer adjusting module 530 is configured to:
receive a selecting operation acting on the layer identifier, and mark the layer identifier and the effect layer corresponding to the layer identifier as a selected state.

On the basis of the above optional technical solutions, optionally, the second editing trigger operation includes at least one of a layer hiding operation, a layer deleting operation, a layer replacing operation and an identifier name modifying operation; the effect layer adjusting module 530 is configured to perform at least one of the following operations:
receiving a layer hiding operation acting on the layer identifier, and adjusting the effect layer corresponding to the layer identifier to an invisible state in the template image;
receiving a layer deleting operation acting on the layer identifier, and deleting the effect layer corresponding to the layer identifier from the template image;
receiving a layer replacing operation acting on the layer identifier, and updating the layer identifier and the effect layer in the template image based on the layer replacing operation;
receiving an identifier name modifying operation acting on the layer identifier, and modifying an identifier name of the layer identifier displayed in the layer editing region based on the identifier name modifying operation.

On the basis of the above optional technical solutions, optionally, the apparatus further includes: a layer adjusting module, configured to receive a layer adjusting operation acting on the effect layer, and adjust the effect layer based on the layer adjusting operation, wherein the layer adjusting operation includes at least one of a display position adjusting operation, a display size adjusting operation, a display color adjusting operation, a replacing operation, a deleting operation and a hiding operation.

The editing apparatus of the effect layer provided by the embodiment of the present disclosure can execute the editing method of the effect layer provided by any embodiment of the present disclosure, and has corresponding functional modules for executing the method and corresponding beneficial effects.

It is worth noting that various units and modules included in the above apparatus are only divided according to functional logic, but are not limited to the above division, as long as corresponding functions can be realized; in addition, the specific names of various functional units are intended only for the convenience of distinguishing each other, and are not used to limit the protection scope of the embodiment of the present disclosure.

Fig. 9 is a schematic structural diagram of an electronic device provided by an embodiment of the present disclosure. Fig. 9 is specifically referred below, and it shows the structure schematic diagram suitable for achieving the electronic device 600 in the embodiment of the present disclosure. The electronic device 600 in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in Fig. 9 is only an example and should not impose any limitations on the functions and use scopes of the embodiments of the present disclosure.

As shown in Fig. 9, the electronic device 600 may include a processing apparatus (such as a central processing unit, and a graphics processor) 601, it may execute various appropriate actions and processes according to a program stored in a read-only memory (ROM) 602 or a program loaded from a storage apparatus 608 to a random access memory (RAM) 603. In RAM 603, various programs and data required for operations of the electronic device 600 are also stored. The processing apparatus 601, ROM 602, and RAM 603 are connected to each other by a bus 604. An input/output (I/O) interface 605 is also connected to the bus 604.

Typically, the following apparatuses may be connected to the I/O interface 605: an input apparatus 606 such as a touch screen, a touchpad, a keyboard, a mouse, a camera, a microphone, an accelerometer, and a gyroscope; an output apparatus 607 such as a liquid crystal display (LCD), a loudspeaker, and a vibrator; a storage apparatus 608 such as a magnetic tape, and a hard disk drive; and a communication apparatus 609. The communication apparatus 609 may allow the electronic device 600 to wireless-communicate or wire-communicate with other devices so as to exchange data. Although Fig. 9 shows the electronic device 600 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 609, or installed from the storage apparatus 608, or installed from ROM 602. When the computer program is executed by the processing apparatus 601, the above functions defined in the embodiments of the present disclosure are executed.

The names of messages or information exchanged between multiple apparatuses in the embodiments of the present disclosure are used for illustrative purposes only, and are not used to limit the scope of these messages or information.

The electronic device provided by the embodiment of the present disclosure belongs to the same inventive concept as the editing method of the effect layer provided by the above embodiments, technical details that are not fully described in the present embodiment may be referred to the above embodiments, and the present embodiment has the same beneficial effects as the above embodiments.

An embodiment of the present disclosure provides a computer storage medium, on which a computer program is stored, wherein the program, when executed by a processor, realizes the editing method of the effect layer as described in any of the above embodiments.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above computer-readable medium can be contained in the above electronic device; and it can also exist separately without being assembled into the electronic device.

The above computer-readable medium carries one or more programs, and the above one or more programs, when executed by the electronic device, cause the electronic device to: present a template image, wherein a plurality of added effect layers are presented in the template image; receive a first editing trigger operation acting on the effect layer, and present a layer identifier of the effect layer in a layer editing region according to an adding order of the effect layer; receive a second editing trigger operation acting on the layer identifier, and adjust the effect layer corresponding to the layer identifier.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases. For example, the first acquisition unit can also be described as "a unit that acquires at least two Internet protocol addresses".

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

According to one or more embodiments of the present disclosure, Example 1 provides an editing method of an effect layer, which includes:
presenting a template image, wherein a plurality of added effect layers are presented in the template image;
receiving a first editing trigger operation acting on the effect layer, and presenting a layer identifier of the effect layer in a layer editing region according to an adding order of the effect layer;
receiving a second editing trigger operation acting on the layer identifier, and adjusting the effect layer corresponding to the layer identifier.

According to one or more embodiments of the present disclosure, Example 2 provides an editing method of an effect layer, which further includes:
determining, in response to a layer adding operation acting on the effect layer, a mount position of the effect layer relative to a template body in the template image, and adding the effect layer to the template image based on the mount position, and presenting the effect layer that has been added.

According to one or more embodiments of the present disclosure, Example 3 provides an editing method of an effect layer, which includes:
optionally, the mount position includes at least one of a foreground mount point, a body mount point and a background mount point in the template image, an effect layer corresponding to the foreground mount point is located on an upper layer of the template body, an effect layer corresponding to the body mount point is located on a same layer as the template body, and an effect layer corresponding to the background mount point is located on a lower layer of the template body.

According to one or more embodiments of the present disclosure, Example 4 provides an editing method of an effect layer, which includes:
optionally, the second editing trigger operation includes an order adjusting operation;
the receiving a second editing trigger operation acting on the layer identifier, and adjusting the effect layer corresponding to the layer identifier, includes:
receiving an order adjusting operation acting on the layer identifier, and adjusting a relative presenting position of the effect layer corresponding to the layer identifier in the template image based on the order adjusting operation.

According to one or more embodiments of the present disclosure, Example 5 provides an editing method of an effect layer, which includes:
optionally, the receiving an order adjusting operation acting on the layer identifier, and adjusting a relative presenting position of the effect layer corresponding to the layer identifier in the template image based on the order adjusting operation, includes:
receiving a dragging operation acting on the layer identifier, and determining the effect layer corresponding to the layer identifier being dragged and effect layers adjacent to the effect layer after being dragged;
modifying a rendering sequence parameter corresponding to the effect layer being dragged based on the effect layers adjacent to the effect layer after being dragged, so as to adjust the relative presenting position of the effect layer in the template image.

According to one or more embodiments of the present disclosure, Example 6 provides an editing method of an effect layer, which includes:
optionally, the second editing trigger operation includes a selecting operation;
the receiving a second editing trigger operation acting on the layer identifier, and adjusting the effect layer corresponding to the layer identifier, includes:
receiving a selecting operation acting on the layer identifier, and marking the layer identifier and the effect layer corresponding to the layer identifier as a selected state.

According to one or more embodiments of the present disclosure, Example 7 provides an editing method of an effect layer, which includes:
optionally, the second editing trigger operation includes at least one of a layer hiding operation, a layer deleting operation, a layer replacing operation and an identifier name modifying operation;
the receiving a second editing trigger operation acting on the layer identifier, and adjusting the effect layer corresponding to the layer identifier, includes at least one of the following operations:
receiving a layer hiding operation acting on the layer identifier, and adjusting the effect layer corresponding to the layer identifier to an invisible state in the template image;
receiving a layer deleting operation acting on the layer identifier, and deleting the effect layer corresponding to the layer identifier from the template image;
receiving a layer replacing operation acting on the layer identifier, and updating the layer identifier and the effect layer in the template image based on the layer replacing operation;
receiving an identifier name modifying operation acting on the layer identifier, and modifying an identifier name of the layer identifier displayed in the layer editing region based on the identifier name modifying operation.

According to one or more embodiments of the present disclosure, Example 8 provides an editing method of an effect layer, which further includes:
receiving a layer adjusting operation acting on the effect layer, and adjusting the effect layer based on the layer adjusting operation, wherein the layer adjusting operation includes at least one of a display position adjusting operation, a display size adjusting operation, a display color adjusting operation, a replacing operation, a deleting operation and a hiding operation.

According to one or more embodiments of the present disclosure, Example 9 provides an editing apparatus of an effect layer, which includes:
an effect layer presenting module, configured to present a template image, wherein a plurality of added effect layers are presented in the template image;
an editing region presenting module, configured to receive a first editing trigger operation acting on the effect layer, and present a layer identifier of the effect layer in a layer editing region according to an adding order of the effect layer; and
an effect layer adjusting module, configured to receive a second editing trigger operation acting on the layer identifier, and adjust the effect layer corresponding to the layer identifier.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An editing method of an effect layer, comprising:
presenting a template image, wherein a plurality of added effect layers are presented in the template image;
receiving a first editing trigger operation acting on the effect layer, and presenting a layer identifier of the effect layer in a layer editing region according to an adding order of the effect layer;
receiving a second editing trigger operation acting on the layer identifier, and adjusting the effect layer corresponding to the layer identifier.

2. The editing method of the effect layer according to claim 1, further comprising:
determining, in response to a layer adding operation acting on the effect layer, a mount position of the effect layer relative to a template body in the template image, and adding the effect layer to the template image based on the mount position, and presenting the effect layer that has been added.

3. The editing method of the effect layer according to claim 2, wherein the mount position comprises at least one of a foreground mount point, a body mount point and a background mount point in the template image, an effect layer corresponding to the foreground mount point is located on an upper layer of the template body, an effect layer corresponding to the body mount point is located on a same layer as the template body, and an effect layer corresponding to the background mount point is located on a lower layer of the template body.

4. The editing method of the effect layer according to any one of claims 1-3, wherein the second editing trigger operation comprises an order adjusting operation;
the receiving a second editing trigger operation acting on the layer identifier, and adjusting the effect layer corresponding to the layer identifier, comprises:
receiving an order adjusting operation acting on the layer identifier, and adjusting a relative presenting position of the effect layer corresponding to the layer identifier in the template image based on the order adjusting operation.

5. The editing method of the effect layer according to claim 4, wherein the receiving an order adjusting operation acting on the layer identifier, and adjusting a relative presenting position of the effect layer corresponding to the layer identifier in the template image based on the order adjusting operation, comprises:
receiving a dragging operation acting on the layer identifier, and determining the effect layer corresponding to the layer identifier being dragged and effect layers adjacent to the effect layer after being dragged;
modifying a rendering sequence parameter corresponding to the effect layer being dragged based on the effect layers adjacent to the effect layer after being dragged, so as to adjust the relative presenting position of the effect layer in the template image.

6. The editing method of the effect layer according to any one of claims 1-5, wherein the second editing trigger operation comprises a selecting operation;
the receiving a second editing trigger operation acting on the layer identifier, and adjusting the effect layer corresponding to the layer identifier, comprises:
receiving a selecting operation acting on the layer identifier, and marking the layer identifier and the effect layer corresponding to the layer identifier as a selected state.

7. The editing method of the effect layer according to any one of claims 1-6, wherein the second editing trigger operation comprises at least one of a layer hiding operation, a layer deleting operation, a layer replacing operation and an identifier name modifying operation;
the receiving a second editing trigger operation acting on the layer identifier, and adjusting the effect layer corresponding to the layer identifier, comprises at least one of the following operations:
receiving a layer hiding operation acting on the layer identifier, and adjusting the effect layer corresponding to the layer identifier to an invisible state in the template image;
receiving a layer deleting operation acting on the layer identifier, and deleting the effect layer corresponding to the layer identifier from the template image;
receiving a layer replacing operation acting on the layer identifier, and updating the layer identifier and the effect layer in the template image based on the layer replacing operation;
receiving an identifier name modifying operation acting on the layer identifier, and modifying an identifier name of the layer identifier displayed in the layer editing region based on the identifier name modifying operation.

8. The editing method of the effect layer according to any one of claims 1-7, further comprising:
receiving a layer adjusting operation acting on the effect layer, and adjusting the effect layer based on the layer adjusting operation, wherein the layer adjusting operation comprises at least one of a display position adjusting operation, a display size adjusting operation, a display color adjusting operation, a replacing operation, a deleting operation and a hiding operation.

9. An editing apparatus of an effect layer, comprising:
an effect layer presenting module, configured to present a template image, wherein a plurality of added effect layers are presented in the template image;
an editing region presenting module, configured to receive a first editing trigger operation acting on the effect layer, and present a layer identifier of the effect layer in a layer editing region according to an adding order of the effect layer; and
an effect layer adjusting module, configured to receive a second editing trigger operation acting on the layer identifier, and adjust the effect layer corresponding to the layer identifier.

10. The editing apparatus of the effect layer according to claim 9, further comprising:
an effect layer adding module, configured to determine, in response to a layer adding operation acting on the effect layer, a mount position of the effect layer relative to a template body in the template image, and add the effect layer to the template image based on the mount position, and present the effect layer that has been added.

11. The editing apparatus of the effect layer according to claim 10, wherein the mount position comprises at least one of a foreground mount point, a body mount point and a background mount point in the template image, an effect layer corresponding to the foreground mount point is located on an upper layer of the template body, an effect layer corresponding to the body mount point is located on a same layer as the template body, and an effect layer corresponding to the background mount point is located on a lower layer of the template body.

12. The editing apparatus of the effect layer according to any one of claims 9-11, wherein the second editing trigger operation comprises an order adjusting operation;
the effect layer adjusting module is further configured to:
receive an order adjusting operation acting on the layer identifier, and adjust a relative presenting position of the effect layer corresponding to the layer identifier in the template image based on the order adjusting operation.

13. The editing apparatus of the effect layer according to claim 12, wherein the effect layer adjusting module is further configured to:
receive a dragging operation acting on the layer identifier, and determine the effect layer corresponding to the layer identifier being dragged and effect layers adjacent to the effect layer after being dragged;
modify a rendering sequence parameter corresponding to the effect layer being dragged based on the effect layers adjacent to the effect layer after being dragged, so as to adjust the relative presenting position of the effect layer in the template image.

14. The editing apparatus of the effect layer according to any one of claims 9-13, wherein the second editing trigger operation comprises a selecting operation;
the effect layer adjusting module is further configured to:
receive a selecting operation acting on the layer identifier, and mark the layer identifier and the effect layer corresponding to the layer identifier as a selected state.

15. The editing apparatus of the effect layer according to any one of claims 9-14, wherein the second editing trigger operation comprises at least one of a layer hiding operation, a layer deleting operation, a layer replacing operation and an identifier name modifying operation;
the effect layer adjusting module is configured to perform at least one of the following operations:
receiving a layer hiding operation acting on the layer identifier, and adjusting the effect layer corresponding to the layer identifier to an invisible state in the template image;
receiving a layer deleting operation acting on the layer identifier, and deleting the effect layer corresponding to the layer identifier from the template image;
receiving a layer replacing operation acting on the layer identifier, and updating the layer identifier and the effect layer in the template image based on the layer replacing operation;
receiving an identifier name modifying operation acting on the layer identifier, and modifying an identifier name of the layer identifier displayed in the layer editing region based on the identifier name modifying operation.

16. The editing apparatus of the effect layer according to any one of claims 9-15, further comprising:
a layer adjusting module, configured to receive a layer adjusting operation acting on the effect layer, and adjust the effect layer based on the layer adjusting operation, wherein the layer adjusting operation comprises at least one of a display position adjusting operation, a display size adjusting operation, a display color adjusting operation, a replacing operation, a deleting operation and a hiding operation.

17. An electronic device, comprising:
one or a plurality of processors;
a storage apparatus, configured to store one or a plurality of programs,
wherein when the one or plurality of programs are executed by the one or plurality of processors, the one or plurality of processors are caused to realize the editing method of the effect layer according to any one of claims 1-8.

18. A storage medium containing computer-executable instructions, wherein the computer-executable instructions, when executed by a computer processor, are used to execute the editing method of the effect layer according to any one of claims 1-8.
